# EUROPÄISCHE PATENTSCHRIFT

(11) **EP 0 973 697 B1**
(45) Veröffentlichungstag und Bekanntmachung des Hinweises auf die Patenterteilung: **19.07.2000**
(21) Anmeldenummer: 98933527.8
(22) Anmeldetag: 13.05.1998
(51) Int. Cl.: C03C 25/66, C03C 13/00, C03C 25/68

(54) **AL2O3-HALTIGES, HOCHTEXTILES UND HOCHTEMPERATURBESTÄNDIGES GLASSTAPELFASERVORGARN SOWIE PRODUKTE HIERAUS**
AL2O3-CONTAINING, HIGH-TEMPERATURE RESISTANT GLASS SLIVER WITH HIGHLY TEXTILE CHARACTER, AND PRODUCTS THEREOF
MECHE DE VERRANNE CONTENANT DE L'AL2O3, A HAUTE RESISTANCE THERMIQUE ET A FORT CARACTERE TEXTILE, AINSI QUE PRODUITS DERIVES

(30) Priorität: 13.05.1997 DE 19719814; 12.06.1997 DE 19724874
(43) Veröffentlichungstag der Anmeldung: 26.01.2000
(73) Patentinhaber: Richter, Robin, 01723 Herzogswalde (DE)
(72) Erfinder: RICHTER, Robin, D-09627 Hilbersdorf (DE); FOCKE, Thomas, D-09599 Freiberg (DE); LEHR, Sven, D-09599 Freiberg (DE)
(74) Vertreter: Stoppkotte, Cornelia, Dr.phil.Dipl.-Chem.
(86) Internationale Anmeldenummer: DE9801336
(87) Internationale Veröffentlichungsnummer: WO9851631

(56) Entgegenhaltungen:
- EP-A- 0 510 653
- US-A- 2 491 761
- US-A- 2 494 259
- US-A- 3 687 850

## Beschreibung

Die vorliegende Erfindung betrifft ein Al₂O₃-haltiges, hochtextiles und hochtemperaturbeständiges Glasstapelfaservorgarn auf Kieselsäurebasis, Produkte aus einem solchen Glasstapelfaservorgarn sowie deren Verwendung.

Die Herstellung textiler Produkte auf anorganischer Faserbasis nach unterschiedlichen Verfahren ist seit langer Zeit bekannt (Ullmanns Enzyklopädie der technischen Chemie, Bd. 11, Verlag Chemie, Weinheim, 1989). Für die derzeitige Fertigung derartiger Produkte werden SiO₂-Fasern auf Silicat- bzw. Kieselglasbasis eingesetzt, wobei bezüglich der Einzelfasern die Primärformen *Filament* (Elementarfaden, Faser unbegrenzter Länge und definierten Faserquerschnitts) und *Stapelfaser* (Faser endlicher Länge und definierten Faserquerschnitts) unterschieden werden (Z. Ges. Textilind. **69**, 839 (1967), DE-PS 42 40 354).

In der DE-PS 42 40 354 wurde beschrieben, daß ein linienförmiges Textilfaserprodukt - das Stapelfaservorgarn (Stapelfaserband) - Ausgangsmaterial für die Herstellung von Stapelfasergarnen und -zwirnen ist, die zu weiteren Folgeprodukten wie Geweben oder Geflechten verarbeitet werden können. Nach dieser Patentschrift ist ein Kieselsäurestapelfaservorgarn bekanntgeworden, das aus Kieselsäurestapelfasern einer Länge von 50 bis 1000 mm besteht und durch eine Einzelfaserfestigkeit von 20 bis 50 cN/tex, eine Haftfestigkeit des Vorgarns von 2 bis 20 N und eine Vorgarnfeinheit von 50 bis 2000 tex charakterisiert ist. Dieses Textilfaserprodukt wird in einem dreistufigen Prozeß erhalten, der das Trockenspinnen von Natronwasserglas-Filamentgarn, die Bildung von Natronwasserglas-Stapelfaservorgarn nach dem Abzugstrommelverfahren und die Umsetzung zu Kieselsäurestapelfaservorgarn in einem Nachbehandlungsbereich miteinander kombiniert. Es basiert somit auf einer Natronwasserglaslösung und enthält ausschließlich SiO₂ und Na₂O in verschiedenen Gewichtsanteilen. Eine Verwendung eines derart hergestellten Kieselsäurestapelfaservorgarns für die Fertigung entsprechender Stapelfasergarne und -zwirne, Schnüre, Geflechte und Gewebe wird für Einsatztemperaturen oberhalb von 400-500°C beansprucht. Zum Verhalten dieses Kieselsäurestapelfaservorgarnes bei Temperaturen um 1000°C liegen jedoch keine Angaben vor. Dieses Material wird im Markt auch nicht angeboten.

Ebenfalls seit langem ist die Herstellung von Glasstapelfaservorgarnen nach dem Abzugstrommelverfahren bekannt (DE-AS 1 270 748, DE-PS 1 199 935, DE-OS 195 05 618). Bei diesen Verfahren läuft geschmolzenes Glas durch Spinndüsen aus, die sich am Boden einer Schmelzwanne befinden. Die Elementarglasfäden (Filamente) werden im Anschluß über eine rotierende Trommel abgezogen, wobei die Glasfäden, mittels eines Abstreichers und luftstromunterstützt, in Glasfasern mit uneinheitlicher Stapellänge zerlegt und zur Erzeugung eines Faserbandes in eine parallel zur Trommelachse liegende Vorrichtung gefördert werden. Die Festigkeit und Geschlossenheit des Glasstapelfaservorgarnes sind dabei Funktionen der Abzugsgeschwindigkeit. Während des Fertigungsprozesses des Vorgarnmaterials werden zusätzlich üblicherweise textile Hilfsmittel (z.B. Schlichtemittel) zugesetzt. Aufgrund der im Glas enthaltenen Komponenten können derartige Glasstapelfaservorgarne allerdings nicht für Anwendungen bei Temperaturen oberhalb 300-400°C eingesetzt werden.

Man hat zahlreiche Versuche unternommen, Glasfasern zur Erhöhung ihrer Temperaturbeständigkeit einer Säurebehandlung zu unterziehen, um Glasbestandteile (Trennstellenbildner) und z.T. Netzwerkwandler zu entfernen (US 2 494 259, EP 510 653, GB 976 565, EP 236 735, GB 933 821, GB 20 94 363, US 2 718 461, US 2 491 761, US 4 778 499). Bei diesen bekannten Verfahren wird die Säurebehandlung an den Glasfasern im Sinne von Einzelfasern (Filamenten), an Glasfasermassen wie Matten, Filzen, lockeren Schüttungen etc., in denen die Fasern regellos (in Wirrlage) vorliegen, oder an bestimmten textilen Folgeprodukten wie Glattgarnen oder Geweben auf Basis von Glasfaserfilamenten durchgeführt. Durch diese bekannten Vorgehensweisen kann zwar die thermische Beständigkeit der so behandelten Fasern und Produkte erhöht werden, jedoch nehmen die mechanischen Eigenschaften (Faserfestigkeit, Elastizität etc.) dadurch so stark ab, daß eine Verarbeitung zu vielfältigen textilen Folgeprodukten nicht möglich ist. Derartige Materialien werden somit vorwiegend für die Fertigung von Geweben mit hohen Raumgewichten eingesetzt (siehe DE-PS 42 40 354). Man hat aus diesem Grunde versucht, die textile Verarbeitung durch zusätzliche Verfahrensschritte sicherzustellen, indem die säurebehandelten Glasfasern mit bestimmten Überzügen versehen (EP 236 735) oder weitere Materialien wie organische Textilfasern eingearbeitet werden (DE-OS 42 21 001). Diese aufwendigen Maßnahmen verbessern zwar in gewissem Maße die mechanischen, jedoch nicht die textilen Eigenschaften dieser Fasermaterialien. Es gelang bisher nicht, Fasermaterialien mit baumwolltypischen Eigenschaften zu erhalten. Zudem werden beim Erwärmen dieser bekannten Fasern organische Bestandteile freigesetzt, die z.T. gesundheitsgefährdend sind. Die Herstellung aller bisher bekannten technischen Textilien für Einsatztemperaturen oberhalb 400-500°C ist auf Basis dieser Materialien nicht realisierbar, da hierfür die entsprechenden voluminösen Stapelfaservorgarne nicht verfügbar sind.

Für einen potentiellen Einsatz im Hochtemperaturbereich um 1000°C werden als textile Faserprodukte bisher, neben den genannten Kieselsäurestapelfaservorgarnen und der Kieselglasfasern, deren Herstellung von einer Quarzschmelze ausgeht (Temperaturen oberhalb 2000°C) und enorme Kosten verursacht, noch Glattgarne auf Filamentbasis (SiO₂-Gehalte oberhalb 90%) vorgeschlagen. Um sie voluminöser und bauschiger zu machen, werden diese glatten Garne gewöhnlich einer aufwendigen und kostenintensiven Verarbeitungsstufe, dem Texturieren, unterworfen. Der Texturierprozeß wird so gestaltet, daß die über ein Lieferwerk einer Düse zugeführten kapillaren Glasfäden mittels Kaltluft verwirbelt werden (Blasverfahren). Jedoch gelingt es auch durch diesen Verarbeitungsprozeß nicht wie erwünscht, derart bauschige und voluminöse hochtextile Faserprodukte wie in der vorliegenden Erfindung zu erhalten, die wesentlich mehr Gemeinsamkeiten mit einer Baumwollfaser aufweisen als mit einem Fasermaterial, welches typische Glaseigenschaften zeigt (Sprödigkeit der Fasern, Hautreizungen etc.). Eine mögliche Vielfalt an textilen Folgeprodukten, die aus diesen texturierten Glattgarnen herstellbar sind, wird somit von vornherein beschränkt. Aus dem Stand der Technik bekanntgewordene Versuche, Stapelfasergarne aus Glas mit Texturiereffekt zu erzeugen (DE-OS 195 05 618), stellen in diesem Zusammenhang keine Alternative dar, da das verwendete C-Glasstapelfaservorgarn zum einen wiederum mit zusätzlichen Endlosfäden verarbeitet werden muß, zum anderen nicht bei höheren Temperaturen (400 - ca. 1100°C) einsetzbar ist.

Folgenden Kriterien genügen die nach dem Stand der Technik bekannten Materialien auf anorganischer Faserbasis somit nicht:
- hochtextile Fasereigenschaften (Baumwollcharakter, d.h. aufgebauschte, flauschige, voluminöse Struktur, hohes Lufteinbindevermögen, Ähnlichkeit mit einer Baumwollflyerlunte, angenehmes Empfinden bei Hautkontakt, keine Hautreizungen, keine Sprödigkeit der Fasern)
- Erhalt bzw. Verbesserung mechanischer Eigenschaften nach einer Säurebehandlung
- unmittelbare Herstellung vielfältiger textiler Folgeprodukte; dabei keine Beschränkung auf Technische Textilien, sondern auch Einsatz in der Textilindustrie möglich
- für Herstellung vielfältiger textiler Folgeprodukte keine zusätzlichen Materialien bzw. Maßnahmen (Texturieren, Beschichten etc.) erforderlich
- keine ausreichende thermische Beständigkeit bei Dauertemperaturen oberhalb 400°C
- keine Freisetzung organischer Bestandteile beim Erwärmen, keine Gesundheitsgefährdungen.

Aufgabe der vorliegenden Erfindung ist die Bereitstellung eines Al₂O₃-haltigen, hochtemperaturbeständigen Glasstapelfaservorgarns als textiles Hochleistungsfasermaterial, das als Rohstoff für die Fertigung sämtlicher bisher bekannter textiler Folgeprodukte dienen kann. Diese textile Hochleistungsfaser soll dabei spezielle Vorzüge organischer Textilfasern bzw. Naturfasern mit denen anorganischer Textilfasern in einem resultierenden Kombinationsprodukt vereinen ("anorganische Baumwolle"). In Analogie zu einer Baumwollfaser soll der hochtextile Charakter des erfindungsgemäßen Fasermaterials durch eine offene, aufgeworfene, gekräuselte Struktur und eine hohe Voluminösität und Bauschigkeit charakterisiert sein. Im textilen Fertigungsprozeß läßt sich die neuartige anorganische Faser wie eine Baumwollfaser weiterverarbeiten, jedoch sollen dabei keine Zusätze weiterer Materialien, textiler Hilfsmittel, Binder o.ä. erforderlich sein. Das neuartige Glasstapelfaservorgarn soll dabei, ohne erforderliche weitere Prozeßstufen (Beschichtungsmaßnahmen, Texturierschritte o.ä.), unmittelbar zu Stapelfasergarnen, -zwirnen und technischen Textilien mit hochtextilen Eigenschaften weiterverarbeitet werden können. Bei der Herstellung und Verwendung des erfindungsgemäßen Glasstapelfaservorgarns soll lediglich ein vernachlässigbarer Staubanteil anfallen. Im Vergleich zur Baumwollfaser soll sich das Al₂O₃-haltige Glasstapelfaservorgarn desweiteren durch deutlich verbesserte mechanische Eigenschaften und eine enorm erhöhte thermische Beständigkeit auszeichnen. Das erfindungsgemäße Hochtextilfasermaterial soll keine organischen Komponenten enthalten, so daß beim Erwärmen keinerlei organische Bestandteile freigesetzt werden können. Das Fasermaterial soll einen hohen Devitrifikationswiderstand aufweisen, gegen die meisten Chemikalien (mit Ausnahme von Phosphorsäure, Flußsäure sowie starken Laugen) beständig sowie hautfreundlich und gesundheitlich unbedenklich sein.

Al₂O₃-haltige Glasstapelfaservorgarne sollen hergestellt werden, die als Kombination der Eigenschaften von organischer und anorganischer Textilfaser ("anorganische Baumwolle") sowohl zu sämtlichen bisher bekannten textilen Folgeprodukten verarbeitbar als auch für Anwendungen bei Temperaturen von 400 bis ca. 1100°C geeignet sind.

Die Lösung dieser Aufgabe erfolgt durch ein Al₂O₃-haltiges, hochtemperaturbeständiges Glasstapelfaservorgarn gemäß Anspruch 1, ein Al₂O₃-haltiges, hochtemperaturbeständiges Glasstapelfaserprodukt gemäß Anspruch 14 sowie die Verwendung solcher Glasstapelfaservorgarne und -produkte gemäß Anspruch 16 und 17.

Das erfindungsgemäße Glasstapelfaservorgarn, welches insbesondere ein Kieselsäurestapelfaservorgarn ist, weist hochtextile Eigenschaften auf, welche sich in einer baumwollartigen Eigenschaft und/oder einer erhöhten Voluminösität zeigen.

Insbesondere wird ein erfindungsgemäßes Glasstapelfaservorgarn dadurch erhalten, daß ein geeignetes Stapelfaservorgarn einer Säureextraktion unterzogen wird, welche besonders hochtextile Eigenschaften des resultierenden Al₂O₃-haltigen, hochtemperaturbeständigen Glasstapelfaservorgarns hervorruft.

Gegenstand der Ansprüche 3 bis 5 sind besonders vorteilhafte chemische Zusammensetzungen Al₂O₃-haltiger, hochtemperaturbeständiger Glasstapelfaservorgarne, wie sie nach der Säurebehandlung vorliegen.

Die Ansprüche 6 bis 8 betreffen besonders vorteilhafte Eigenschaften eines derartigen textilen Hochleistungsfasermaterials.

In den Ansprüche 9 bis 13 werden die bevorzugten Herstellungsbedingungen für das erfindungsgemäße Glasstapelfaservorgarn weiter ausgeführt.

Erfindungsgemäß wird ausgehend von bekannten Vorschriften zur Herstellung hochtemperaturbeständiger Glasfasern (GB 976 565, GB 1 121 046), ein Glasstapelfaservorgarn einer Säureextraktion unterworfen. Das Glasstapelfaservorgarn weist dabei die folgende Zusammensetzung auf: 70-75 Gewichts-% SiO₂, 15-25 Gewichts-% Na₂O und/oder K₂O sowie 1 bis 5 Gewichts-% Al₂O₃, wobei gegebenenfalls daneben weitere Komponenten in geringen Gewichtsanteilen (bis 5 %) enthalten sein können. Dabei wurde überraschenderweise gefunden, daß durch eine geeignete Kombination von Stapelfaservorgarn/Säurebehandlung besonders hochtextile Eigenschaften im resultierenden Al₂O₃-haltigen Glasstapelfaservorgarn generiert werden, so daß eine baumwollartige Hochtextilfaser herstellbar ist ("anorganische Baumwolle"). Ein Al₂O₃-Gehalt zwischen 1 und 5 Gewichts-% ist im Hinblick auf den textilen Charakter und hohe Faserfestigkeiten bevorzugt. Weitere mögliche Komponenten in geringen Gewichtsanteilen wie CaO, TiO₂, MgO, Fe₂O₃, B₂O₃ oder Spuren weiterer Komponenten beeinträchtigen nicht den textilen Fasercharakter, sie können sogar die mechanischen Eigenschaften zusätzlich verbessern.

Durch Versuche wurde ermittelt, daß besonders vorteilhafte textile Eigenschaften und hohe Festigkeiten dann erreicht werden, wenn ein Glasstapeifaservorgarn mit 70-75 Gewichts-% SiO₂, 15-25 Gewichts-% Na₂O und/oder K₂O sowie 1 bis 5 Gewichts-% Al₂O₃ einem Säurebad ausgesetzt wird, das ggf. 0,1 bis 5 %, bevorzugt 1 bis 2 %, lösliche Siliconverbindungen enthält. In allen Fällen wird es bevorzugt, Na₂O als Alkalioxid einzusetzen. Im Gegensatz zu bekannten Behandlungsverfahren, wie sie beispielsweise die GB-Patentschrift 976 565 offenbart, darf die Säurebehandlung jedoch keine Abreicherung oder gar vollständige Entfernung des Al₂O₃-Anteils bewirken, da dieser zum textilen Hochleistungscharakter und zu ausgezeichneten mechanischen Eigenschaften des Glasstapelfaservorgarns maßgeblich beiträgt.

Für die Säureextraktion können anorganische und organische Säuren eingesetzt werden. Bei Verwendung der anorganischen Säuren Schwefelsäure, Salpetersäure, Phosphorsäure oder vorzugsweise Salzsäure wird die Säureextraktion zweckmäßig innerhalb eines Temperaturbereiches von 30 bis 90°C, vorzugsweise 40 bis 60°C während 2 bis 12, vorzugsweise 10 bis 12 Stunden durchgeführt, wobei die Säurekonzentration 1 bis 30 %, vorzugsweise 15 bis 20 %, und das Mengenverhältnis des eingesetzten Glasfasermaterials zu dem Volumen des Säuremediums 1/2,1 bis 1/40, bevorzugt 1/4 bis 1/15, beträgt.

Wird eine organische Säure wie Ameisensäure, Essigsäure oder Oxalsäure verwendet, liegt die angewendete Temperatur zweckmäßig zwischen 30°C und dem Siedepunkt der organischen Säure, bevorzugt zwischen 50 und 90°C, während einer Zeitdauer von 2 bis 12 Stunden, bevorzugt 10 bis 12 Stunden. Die Säurekonzentration beträgt für Ameisen- und Essigsäure 1 bis 80 %, für Oxalsäure 1 bis 30%, und das Mengenverhältnis des eingesetzten Glasfasermaterials zu dem Volumen des Säuremediums ebenfalls 1/2,1 bis 1/40.

Die nachfolgende Spülung mit Wasser kann bei einer Temperatur von 15 bis 120°C, vorzugsweise 15 bis 20°C, gegebenenfalls unter Druck, vorgenommen werden. Bei Einsatz von Alkoholen wie Methanol oder Ethanol sowie Salzlösungen als Spülmedien werden Temperaturen zwischen 15 und 60°C bevorzugt. Die anschließende Trocknung wird vorzugsweise bei einer Temperatur von 40 bis 150°C, vorzugsweise 50 bis 130°C, durchgeführt. Gegebenenfalls kann ein Glühen bei 300-1000°C folgen.

Sowohl im Säurebehandlungsprozeß als auch im Spülprozeß können ruhende oder auch bewegte Medien eingesetzt werden. Zweckmäßig wird das Stapelfaservorgarn in Spulenform verwendet.

Im Trocknungsprozeß können alle üblichen Trocknungmethoden und Trockner eingesetzt werden, abhängig vom Feuchteanteil des Al₂O₃-haltigen Glasstapelfaservorgarns. Mitunter empfiehlt sich eine Vortrocknungsstufe, z.B. durch Abschleudern oder Abdrücken mittels Druckluft. Ob das Trocknungsverfahren diskontinuierlich oder kontinuierlich abläuft, ist für eine erfolgreiche Trocknung des erfindungsgemäßen Vorgarnmaterials nicht von Belang.

Im Gegensatz zum bisher bekannten Stand der Technik bei säurebehandelten Glasfasern werden die mechanischen und textilen Eigenschaften des säureextrahierten Al₂O₃-haltigen Glasstapelfaservorgarns nicht verschlechtert. Durch die selektive Säureextraktion wird ein weitestgehender Erhalt der Faserfestigkeit gewährleistet, teilweise wurde sogar eine überraschende Festigkeitserhöhung beobachtet. Eine textile Verarbeitung zu sämtlichen bekannten textilen Folgeprodukten wie Stapelfasergarnen, -zwirnen und technischen Textilien ist unmittelbar und ohne weitere erforderliche Materialien und Maßnahmen möglich, und auch die Staubbelastung ist vernachlässigbar gering. Die textile Verarbeitung des erfindungsgemäßen Vorgarnmaterials ist ohne erforderliche Zugabe textiler Hilfsmittel, weiterer Materialien (Glasseidenfäden, Edelstahlfäden etc.), Bindemittel o.ä. realisierbar. Im Bedarfsfall ist jedoch auch eine Zugabe geringer Mengen an Textilhilfsmitteln (insbesondere Antistatikadditiven) möglich. Ein weiterer besonderer Vorteil der erfindungsgemäßen "anorganischen Baumwolle" ist, daß sie durch die Säureextraktion vollständig von organischen Anteilen befreit wird, so daß beim Erwärmen bis 1100°C keine organischen Bestandteile freigesetzt werden können. Das bei herkömmlichen anorganischen Fasermaterialien (z.B. Glasfasermaterialien) zu beobachtende Abbrennen der Textilschlichte wird für die erfindungsgemäßen Al₂O₃-haltigen Glasstapelfaservorgarne somit nicht verzeichnet. Aufgrund der zugrundeliegenden Faserquerschnitte (6 bis 15 µm, bevorzugt 7 bis 10 µm) weisen diese Fasermaterialien kein cancerogenes Potential auf (keine Lungengängigkeit), so daß eine Gesundheitsgefährdung ausgeschlossen werden kann.

Durch die vorliegende Erfindung wird nunmehr ein hochtemperaturbeständiges, hochtextiles, Al₂O₃-haltiges Glasstapelfaservorgarn auf Kieselsäurebasis zur Verfügung gestellt, das die besonderen Vorzüge organischer und anorganischer Textilfasern in idealer Weise miteinander kombiniert. Ohne erforderliche aufwendige und kostenintensive Verfahrensschritte, insbesondere Texturierschritte, wird ein Vorgarnmaterial mit offener, aufgebauschter, flauschiger Struktur, wie sie auch in der Baumwollfaser vorliegt, erhalten. Aber selbst durch die Texturierverfahren von Materialien nach dem Stand der Technik ist es nicht möglich, vergleichbare aufgebauschte und flauschige Textilfaserprodukte zu erhalten, die aufgrund ihrer Fülligkeit und Voluminösität große Luftmengen zu speichern vermögen und daher ein ausgezeichnetes Isolierverhalten besitzen. Desweiteren weisen erfindungsgemäße Vorgarne und Baumwollflyerlunten deutliche Analogien auf (Aussehen, angenehmes Empfinden bei Hautkontakt etc.). Typische Glaseigenschaften (z.B. Sprödigkeit der Fasern, Auslösen von Hautreizungen bzw. unangenehmes Empfinden bei Hautkontakt, geringe Voluminösität und hohes Eigengewicht (Glattgarne)) wurden somit durch die Säureextraktion beseitigt. Nichtsdestoweniger weist das erfindungsgemäße Al₂O₃-haltige Glasstapelfaservorgarn, unter Erhalt der Vorzüge der Baumwollfaser, auch günstige Eigenschaften anorganischer Textilfasern auf. Neben der wesentlich erhöhten Faserfestigkeit wird infolge der Säureextraktion auch die Temperaturbeständigkeit des Materials derart erhöht, daß es bei Temperaturen bis ca. 1100°C einsetzbar ist. Auch bei diesen hohen Temperaturen wird noch eine beachtliche Restfestigkeit des Vorgarns registriert. Zusätzlich weist es einen hohen Devitrifikationswiderstand auf: bei 1075°C wird eine Bildung von α-Cristobalit erst nach 24 h beobachtet. Im Vergleich zur Baumwollfaser zeichnet sich das neuartige Glasstapelfaservorgarn auf Kieselsäurebasis durch eine deutlich geringere Wasseraufnahme aus (< 0,5 %, Baumwolle ca. 8 %). Aufgrund freier Si-OH-Gruppierungen liegt desweiteren ein hohes Absorptionsvermögen vor. Diese reaktive Oberfläche ist somit zusätzlichen Ionenaustausch- und Modifizierungsreaktionen zugänglich. Nicht zuletzt ist, durch eine entsprechende Auswahl der Bedingungen im sauren Bad, selbst eine gezielte Einstellung der Porosität im Al₂O₃-haltigen Glasstapelfaservorgarn realisierbar (spezifische Oberfläche: 2-20 m²/g, spezifisches Porenvolumen: 10-25 mm³/g, spezifische Porenoberfläche: 5-15 m²/g bei Faserquerschnitten von 9,5 bis 11 µm).

Al₂O₃-haltige, hochtemperaturbeständige Glasstapelfaserprodukte mit hochtextilen Eigenschaften sind Gegenstand von Anspruch 14 und 15. Die Verwendung des erfindungsgemäßen Vorgarnmaterials sowie hieraus gefertigter Stapelfasergarne, -zwirne und technischer Textilien, sowie loser Schnittfasern, ist Gegenstand des Anspruchs 15. Diese Produkte sind besonders für Anwendungen bei Temperaturen oberhalb 400°C nützlich.

Das erfindungsgemäße Glasstapelfaservorgarn besteht aus Stapelfasern einer Stapellänge zwischen 50 und 1000 mm und kann in Feinheiten zwischen 100 und 2000 tex gefertigt werden. Stapelfaservorgarne ab einer Feinheit von ca. 150 tex können z.B. unmittelbar als Schußfäden zur Herstellung von Glasfasergeweben eingesetzt werden. Auf herkömmlichen Garn- und Fachmaschinen können aus diesem Vorgarnmaterial Glasstapelfasergarne auf Kieselsäurebasis erhalten werden, die beispielsweise als Kett- oder Schußfäden bei der Herstellung von Glasfasergeweben und Glasfasergeflechten Anwendung finden, z.B. in Glasgeweben (als Rollenware), Gewebebändern, Glasfaserschnüren, -schläuchen und -packungen (rund oder viereckig). Aufgrund der Analogie zu einer Baumwollflyerlunte wird auf Spulen aufgewickeltes Stapelfaservorgarn bevorzugt direkt einer Spinn-, Fach- oder Zwirnmaschine zugeführt.

Wird für bestimmte Anwendungsfälle eine zusätzliche Festigkeitserhöhung gewünscht, können Glasstapelfasergarne, aber auch die erfindungsgemäßen Glasstapelfaservorgarne selbst auf handelsüblichen Zwirnmaschinen verzwirnt werden. Steht jedoch eine maximal erreichbare Voluminösität des Glasfaserproduktes im Vordergrund, wird bei der textilen Verarbeitung bevorzugt das Glasstapelfaservorgarn selbst eingesetzt. Aufgrund des baumwollartigen, voluminösen Charakters können auf diese Weise textile Folgeprodukte mit geringem Gewicht gefertigt werden, so daß eine enorme Materialeinsparung und damit Kostensenkung pro laufendem Meter bzw. Flächeneinheit erzielt wird. Dies gilt ebenso für die Herstellung von Glasfasergewirken und -gestricken auf herkömmlichen Industriewirk- und -nähmaschinen. Generell wird bei der Verarbeitung auf Textilmaschinen lediglich eine vernachlässigbare Staubungsgefahr festgestellt.

Die Al₂O₃-haltigen Glasstapelfaservorgarne können auch zur Herstellung von Vliesstoffen dienen. Aufgrund des baumwollartigen Charakters des Fasermaterials sind Vliesstoffe mit geringen Packungsdichten (Raumgewichte <90 kg/m³) und hohem Isolationsvermögen sehr leicht zugänglich, da auf entsprechende Texturierverfahren verzichtet werden kann. Auch hierbei ist somit eine beträchtliche Einsparung von Materialkosten pro Flächeneinheit angezeigt (bis ca. 50 % gegenüber handelsüblichen Vliesstoffen auf Basis texturierter Filamentgarne). Die Al₂O₃-haltigen Glasstapelfaservorgarne werden der Fertigungsstrecke in geschnittener Form zugeführt. Die Verfestigung der Vliesstoffe erfolgt bevorzugt durch Verschlingen der Stapelfasern mittels durchstechender Nadeln (Nadelvliese). Für spezielle Einsatzzwecke ist auch eine chemische Vliesverfestigung, z.B. durch Auftragen von Klebemitteln, möglich. Eine kompakte Verdichtung derartiger Faservliesstoffe macht zudem die Herstellung von Glasfaserplatten (-boards) zugänglich. Auch eine Fertigung entsprechender Faserpapiere, bei der in Wasser befindliche Al₂O₃-haltige Glasstapelfasern auf einer wasserdurchlässigen Fläche (z.B. Siebtrommel) abgelegt werden, ist möglich. Dies stellt jedoch keine Vorzugsvariante dar.

Aufgrund ihrer hohen thermischen Beständigkeit und ihres hervorragenden Isolationsvermögens eignen sich die erfindungsgemäßen Al₂O₃-haltigen Glasstapelfaservorgarne und hieraus gefertigten textilen Folgeprodukte besonders als Wärmeisolationsmaterialien, insbesondere in Öfen, Brennkammern, Kesseln, Gasleitungen, für Hochtemperaturdichtungen und Hochtemperaturisolierungen, als Isolations- und Schallschutzmaterialien in der Bauindustrie, im Brandschutz, für akustische und thermische Dämmung in der Kfz-Industrie (z.B. im Motor, in Bremsbelägen, im Katalysator-, für Kabelummantelungen, im Auspuff- und Schalldämpferbereich), in der Metallbearbeitung und chemischen Industrie (z.B. als Hitzeschutz bei Aluminiumschmelzen), für Elektro- und Haushaltsgeräte, in der Abgas- und Filtriertechnik (z.B. zur Abgasreinigung von Ruß und Stäuben, für die Heißgasfiltration, als Hochleistungsfilter), in der Medizintechnik (z.B. als Kabelschutz, Schlauchfilter, Prothesen), als Batterieseparatoren und Kompensatoren in Kraftwerken (z.B. für Gasturbinen, Kessel- und Müllverbrennungsanlagen), zur Isolierung von Rohren, Pipelines und elektrischen Leitungen, im Schiffsbau, zur Herstellung von Wärmeschutzschilden bei der Luft- und Raumfahrt sowie als Asbest- und Keramikfaserersatz.

Die erfindungsgemäßen Textilfaserprodukte können aber auch mit großem Erfolg als Verstärkungsmaterial für Kunststoffe (z.B. im Boots- und Schiffsbau, im Tank-, Behälter- und Anlagenbau, für Sportgeräte), zur Werkstoffverstärkung (z.B. durch Einbringen in eine Metall-, insbesondere Al-Matrix über einen Schmelzprozeß), als Futter für Textilien und Spezialtextilien, als Träger für Bitumen und für die Verstärkung von Gips, Zement, Papier (z.B. für Fasertapeten) und Kautschuk verwendet werden.

Die folgenden Beispiele dienen zur weiteren Erläuterung der vorliegenden Erfindung.

### Beispiel 1

550 g eines säureextrahierten Al₂O₃-haltigen Glasstapelfaservorgarnes der Feinheit 430 tex (Vorgarn 1, Extraktion mit 15 %iger Salzsäure in Gegenwart löslicher Siliconverbindungen (3%), Temperatur 55°C, Extraktionszeit 10 Stunden, Mengenverhältnis eingesetztes Fasermaterial/Säuremedium 1/2,5) mit einer Zusammensetzung aus 94,2 Gewichts-% SiO₂, 1,1 Gewichts-% Na₂O, 4,6 Gewichts-% Al₂O₃ und weiteren Komponenten in Spuren wurden über 2 Laufrollen auf eine 170 mm lange, zylindrische Textilgarnhülse aufgespult. Die Abzugsgeschwindigkeit betrug dabei 120 m/min. Unter analogen Bedingungen wurde ein C-glasähnliches Glasstapelfaservorgarn (Vorgarn 2, Feinheit ebenfalls 430 tex, Zusammensetzung aus 70,2 Gewichts-% SiO₂, 15,7 Gewichts-% Na₂O, 3,5 Gewichts-% Al₂O₃, 5,0 Gewichts-% CaO, 3,1 Gewichts-% MgO, 2,0 Gewichts-% BaO und weiteren Komponenten in Spuren) aufgespult. Die zuvor durchgeführte Säurebehandlung unter identischen Bedingungen bewirkte lediglich eine geringfügige Änderung der chemischen Zusammensetzung (Reduzierung des Alkaligehaltes um 0,3 %) und dadurch keine Erhöhung der thermischen Beständigkeit. Für beide Stapelfaservorgarne (unbehandelt bzw. säureextrahiert) wurden die Vorgarnfestigkeiten (100 mm lange Abschnitte ohne Drehung) sowie der Abrieb und die Anzahl der Fadenrisse (Abreißen des Faserbandes) beim Aufspulen bestimmt.

| Ergebnisse: | |
|---|---|
| **Vorgarn 1 (unbehandelt)** | **Vorgarn 2 (unbehandelt)** |
| Vorgarnfestigkeit: 4,52 cN/tex | Vorgarnfestigkeit: 4,11 cN/tex |
| Abrieb beim Aufspulen: 0,01 Z | Abrieb beim Aufspulen: 0 Z |
| Fadenrisse beim Aufspulen: 0 | Fadenrisse beim Aufspulen: 0 |
| | |

| **Vorgarn 1 (Säureextraktion)** | **Vorgarn 2 (Säureextraktion)** |
|---|---|
| | |
| Vorgarnfestigkeit: 4,47 cN/tex | Vorgarnfestigkeit: 4,10 cN/tex |
| Abrieb beim Aufspulen: 0,01 % | Abrieb beim Aufspulen: 0,01 % |
| Fadenrisse beim Aufspulen: 0 | Fadenrisse beim Aufspulen: 0 |
| Temperaturbeständigkeit: mindestens 1020°C | Temperaturbeständigkeit: maximal 400°C |

### Beispiel 2

Ein Al₂O₃-haltiges Glasstapelfaservorgarn (Feinheit 630 tex, Vorgarnfestigkeit 4,55 cN/tex, Zusammensetzung: SiO₂ 74,8 %, Na₂O 17,5 %, K₂O 1,0 %, Al₂O₃ 2,2 %, CaO 1,7 %, MgO 1,1 %, B₂O₃ 0,9 %, TiO₂ 0,3 %, weitere Bestandteile in Spuren) wurde einer mineralsauren Extraktion mit Salzsäure unterzogen. Dabei wurden 50 g Stapelfaservorgarn (Faserquerschnitt 7 µm) in einem 500 ml-PTFE-Gefäß in 300 ml 20 %iger Salzsäure in Gegenwart löslicher Siliconverbindungen (1,5 %) innerhalb von 12 Stunden bei einer Temperatur von 55°C extrahiert. Nach 10-minütiger Abtropfzeit wurde das so behandelte Stapelfaservorgarn sechsmal mit Kaltwasser (Temperatur 18°C) gespült. Daraufhin wurde das extrahierte und gespülte Vorgarnmaterial 12 Stunden bei einer Temperatur von 55°C getrocknet. Danach wies das hochtextile, baumwollartige Al₂O₃-haltige Glasstapelfaservorgarn folgende Zusammensetzung auf:

| | |
|---|---|
| SiO₂ | 94,7 Masse-% |
| Na₂O | 0,6 Masse-% |
| Al₂O₃ | 2,5 Masse-% |
| CaO | 0,9 Masse-% |
| MgO | 0,7 Masse-% |
| B₂O₃ | 0,4 Masse-% |
| TiO₂ | 0,1 Masse-% |

Das auf diese Weise hergestellte Vorgarnmaterial mit baumwollartigem, voluminösem Charakter wies eine Dauertemperaturbeständigkeit bis mindestens 1000°C auf. Die Vorgarnfestigkeit nach der Säurebehandlung betrug 4,42 cN/tex. Nach 24-stündiger Behandlung bei 900°C wurde noch eine Restfestigkeit von 32 % erhalten. Unter diesen Bedingungen wurde keine Bildung von α-Cristobalit beobachtet.

### Beispiel 3

Zur Charakterisierung des baumwollartigen, voluminösen Charakters von erfindungsgemäßem Al₂O₃-haltigen Glasstapelfaservorgarn wurden die Schüttdichten von unbehandeltem und säureextrahiertem Material in unverdichtetem bzw. verdichtetem Zustand bestimmt (als Schnittfasern 5 mm) und hieraus relative Porenvolumina abgeschätzt. Desweiteren sind Ergebnisse von Wärmeleitfähigkeitsmessungen angegeben, die bei Raumtemperatur erhalten wurden. Die Versuchsergebnisse werden Daten gegenübergestellt, die an einem nicht hochtemperaturbeständigen C-glasähnlichen Glasstapelfaservorgarn (Zusammensetzung siehe Beispiel 1) unter analogen Bedingungen experimentell bestimmt wurden. Die Parameter der Säureextraktion und Nachbehandlung entsprechen denen von Beispiel 2.

| Material | Schüttdichte (unverdichtet) [kg/m³] | Schüttdichte (verdichtet mit Kraft 20,21 N) [kg/m³] | rel. Porenvolumen (bezogen auf unbehandeltes Glasstapelfaservorgarn) [%] | Wärmeleitfähigkeit (25°C, Schüttdichte 50 kg/m³) [W/mK] |
|---|---|---|---|---|
| Glasstapelfaservorgarn, *unbehandelt* | 35,5 | 23,0 | 100 | 0,059 |
| Al₂O₃-haltiges Glasstapelfaservorgarn, *säurebehandelt* | 35,6 | 24,9 | 108 | |
| C-glasähnliches Glasstapelfaservorgam, *unbehandelt* | 67,1 | 35,0 | 81 | |
| C-glasähnliches Glasstapelfaservorgarn, *säurebehandelt* | 48,8 | 29,6 | 94 | 0,061 |

### Beispiel 4

Al₂O₃-haltiges Glasstapelfaservorgarn auf Kieselsäurebasis (Feinheit 660 tex, Vorgarnfestigkeit 5,35 cN/tex, Zusammensetzung: SiO₂ 74,8 %, Na₂O 17,5 %, K₂O 1,0 %, Al₂O₃ 2,2 %, CaO 1,7 %, MgO 1,1 %, B₂O₃ 0,9 %, TiO₂ 0,3 %, weitere Bestandteile in Spuren) wurde in Form einer rotierenden Spule einer mineralsauren Extraktion mit Salzsäure unterzogen. Das Vorgarnmaterial (Faserquerschnitt 7 µm) wurde dabei in einem 3500 ml-PTFE-Gefäß in 3000 ml 18 %iger Salzsäure innerhalb von 10 Stunden bei einer Temperatur von 58°C extrahiert. Anschließend wurde das extrahierte Textilfaserprodukt im gleichen Gefäß sechsmal mit Kaltwasser einer Temperatur von 20°C gespült. Daraufhin wurde das extrahierte und gespülte Glasfaserprodukt 12 Stunden bei einer Temperatur von 75°C getrocknet. Anschließend wies das Al₂O₃-haltige Glasstapelfaservorgarn mit baumwollartigem, voluminösem Charakter folgende Zusammensetzung auf:

| | |
|---|---|
| SiO₂ | 96,1 Masse-% |
| Na₂O | 0,1 Masse-% |
| Al₂O₃ | 3,7 Masse-% |

Es versteht sich, daß außerdem Spurenanteile weiterer Komponenten als Verunreinigungen enthalten waren. Der spezifische Masseverlust im Vergleich zum unbehandelten Glasfaserprodukt betrug 15,1 %. Das auf diese Weise hergestellte Stapelfaservorgarn mit baumwollartigem Bausch wies eine Dauertemperaturbeständigkeit bis mindestens 1050°C auf. Nach der Säurebehandlung wurde eine Erhöhung der Vorgarnfestigkeit beobachtet (5,46 cN/tex). Die Restfestigkeit nach 30-stündiger Behandlung bei 1050°C betrug 42 %. Das derart hergestellte und behandelte Vorgarnmaterial wurde im Anschluß an einer herkömmlichen Ringspinnmaschine versponnen (Abzugsgeschwindigkeit 150 m/min). Der hierbei entstandene Abrieb war vernachlässigbar gering (<0,01 %). Fadenrisse wurden während dieses Verarbeitungsvorgangs nicht registriert.

### Beispiel 5

Glasstapelfaservorgarn auf Kieselsäurebasis (Feinheit 420 tex, Vorgarnfestigkeit 4,11 cN/tex), das sich auf einer 170 mm langen, zylindrischen Textilgarnhülse befand, wurde in dieser Form einer mineralsauren Extraktion mit Ameisensäure unterzogen. Das Stapelfaservorgarn (Faserquerschnitt 9 µm) wurde in einem 3500 ml-PTFE-Gefäß in 3100 ml 30 %iger Ameisensäure dabei in Gegenwart löslicher Silicone (2 %) innerhalb von 12 Stunden bei einer Temperatur von 60°C extrahiert. Anschließend wurde das extrahierte Textilfaserprodukt durch Tauchspülung in einem PTFE-Gefäß mit Kaltwasser (Temperatur 18°C) gespült. Das extrahierte und gespülte Vorgarnmaterial wurde 8 Stunden bei einer Temperatur von 115°C getrocknet. Der spezifische Masseverlust im Vergleich zum unbehandelten Vorgarn betrug 13,3 %, der mit einem spezifischen Extraktionsgrad von 96 % korrelierte. Das auf diese Weise hergestellte Al₂O₃-haltige Glasstapelfaservorgarn mit baumwollartigem, voluminösem Charakter wies nach der Behandlung folgende Zusammensetzung auf:

| | |
|---|---|
| SiO₂ | 94,4 Masse-% |
| Na₂O | 0,9 Masse-% |
| Al₂O₃ | 4,3 Masse-% |
| CaO | 0,2 Masse-% |
| MgO | 0,1 Masse-% |

Die Vorgarnfestigkeit nach der Säurebehandlung betrug 3,79 cN/tex. Das Al₂O₃-haltige Glasstapelfaservorgarn mit hochtextilen Eigenschaften wies eine Dauertemperaturbeständigkeit bis mindestens 950°C auf. Nach 24-stündiger Temperung bei dieser Temperatur wurde noch eine Restfestigkeit von 28 % verzeichnet.

## Patentansprüche

1. Al₂O₃-haltiges, hochtextiles und hochtemperaturbeständiges Glasstapelfaservorgarn auf Kieselsäurebasis, welches durch Säureextraktion eines Glasstapelfaservorgarns der folgenden Zusammensetzung:
70-75 Gew.-% SiO₂
15-25 Gew.-% Na₂O und/oder K₂O
1 bis 5 Gew.-% Al₂O₃
sowie bis zu maximal 5 Gew.-% weitere Komponenten
erhältlich ist.

2. Al₂O₃-haltiges, hochtextiles und hochtemperaturbeständiges Glasstapelfaservorgarn auf Kieselsäurebasis nach Anspruch 1, welches durch die Extraktion eines Glasstapelfaservorgarns mit einer anorganischen oder organischen Säure, gegebenenfalls in Gegenwart löslicher Silicone, erhältlich ist, dadurch gekennzeichnet, daß es folgende Komponenten in den angegebenen Masseanteilen enthält:
85 bis 99 Masse-% SiO₂
1 bis 5 Masse-% Al₂O₃
0 bis 10 Masse-% Na₂O und/oder K₂O
0 bis 3 Masse-% CaO
0 bis 2 Masse-% MgO
0 bis 2 Masse-% B₂O₃
0 bis 1 Masse-% TiO₂
0 bis 1 Masse-% Fe-Oxide, insbesondere Fe₂O₃
0 bis 1 Masse-% ZrO₂
0 bis 0,5 Masse-% BaO
0 bis 0,5 Masse-% PbO
0 bis 0,5 Masse-% ZnO
0 bis 0,5 Masse-% Cr₂O₃ und
0 bis 0,5 Masse-% F.

3. Al₂O₃-haltiges, hochtextiles und hochtemperaturbeständiges Glasstapelfaservorgarn nach Anspruch 2, dadurch gekennzeichnet, daß es folgende Komponenten in den angegebenen Masseanteilen enthält:
90 bis 98 Masse-% SiO₂
2 bis 5 Masse-% Al₂O₃
0 bis 3 Masse-% Na₂O und/oder K₂O
0 bis 1 Masse-% CaO
0 bis 1 Masse-% MgO
0 bis 1 Masse-% Fe-Oxide, insbesondere Fe₂O₃ und
0 bis 1 Masse-% TiO₂.

4. Al₂O₃-haltiges, hochtextiles und hochtemperaturbeständiges Glasstapelfaservorgarn nach Anspruch 2 oder 3, dadurch gekennzeichnet, daß es folgende Komponenten in den angegebenen Masseanteilen enthält:
95 bis 98 Masse-% SiO₂
2 bis 5 Masse-% Al₂O₃
0 bis 1 Masse-% Na₂O und/oder K₂O
bezogen auf die Gesamtmasse der genannten Komponenten.

5. Al₂O₃-haltiges, hochtextiles und hochtemperaturbeständiges Glasstapelfaservorgarn nach Anspruch 2, dadurch gekennzeichnet, daß es folgende Komponenten in den angegebenen Masseanteilen enthält:
95 bis 99 Masse-% SiO₂
1 bis 5 Masse-% Al₂O₃
0 bis 1 Masse-% Na₂O und/oder K₂O
0 bis 3 Masse-% CaO
0 bis 1 Masse-% Fe₂O₃
0 bis 1 Masse-% TiO₂ und
0 bis 1 Masse-% MgO.

6. Al₂O₃-haltiges, hochtextiles und hochtemperaturbeständiges Glasstapelfaservorgarn nach einem der Ansprüche 1 bis 5, dadurch gekennzeichnet, daß es einen Faserquerschnitt von 6 bis 15 µm, bevorzugt 7 bis 10 µm, aufweist.

7. Al₂O₃-haltiges, hochtextiles und hochtemperaturbeständiges Glasstapelfaservorgarn nach einem der Ansprüche 1 bis 6, dadurch gekennzeichnet, daß es Stapelfasern einer Länge von 50 bis 1000 mm enthält und/oder eine Feinheit von 100 bis 2000 tex aufweist.

8. Al₂O₃-haltiges, hochtextiles und hochtemperaturbeständiges Glasstapelfaservorgarn nach einem der Ansprüche 1 bis 6, dadurch gekennzeichnet, daß die Festigkeit der einzelnen Fasern 2 bis 50 cN/tex, bevorzugt 10 bis 30 cN/tex beträgt.

9. Al₂O₃-haltiges, hochtextiles und hochtemperaturbeständiges Glasstapelfaservorgarn nach wenigstens einem der Ansprüche 2 bis 7, dadurch gekennzeichnet, daß die Säureextraktion unter Druck und/oder Spülen mit Wasser, Alkoholen oder Salzlösungen und/oder Trocknen sowie gegebenenfalls Glühen durchgeführt wurde.

10. Al₂O₃-haltiges, hochtextiles und hochtemperaturbeständiges Glasstapelfaservorgarn nach wenigstens einem der Ansprüche 2 bis 8, dadurch gekennzeichnet, daß die anorganische Säure Schwefelsäure, Salpetersäure, Phosphorsäure oder vorzugsweise Salzsäure ist und für die Säureextraktion vorzugsweise die folgenden Bedingungen der Säureextraktion angewendet worden sind:
Temperaturbereich: 30-90°C
Konzentrationsbereich: 1-30%
Zeitdauer der Säureextraktion: 2-12 Stunden und Mengenverhältnis des eingesetzten Glasfasermaterials zu dem Volumen des Säuremediums: 1/2,1 bis 1/40.

11. Al₂O₃-haltiges, hochtextiles und hochtemperaturbeständiges Glasstapelfaservorgarn nach wenigstens einem der Ansprüche 2 bis 8, dadurch gekennzeichnet, daß die Säure eine organische Säure, vorzugsweise Ameisensäure, Essigsäure oder Oxalsäure ist und vorzugsweise folgende Bedingungen der Säureextraktion angewendet worden sind:
Temperaturbereich: 30°C bis zum Siedepunkt der organischen Säure
Konzentrationsbereich: 1-80%, bei Oxalsäure 1 bis 30% Zeitdauer der Säureextraktion: 2-12 Stunden und
Mengenverhältnis des eingesetzten Glasfasermaterials zu dem Volumen des Säuremediums: 1/2,1 bis 1/40.

12. Al₂O₃-haltiges, hochtextiles und hochtemperaturbeständiges Glasstapelfaservorgarn nach wenigstens einem der Ansprüche 9 bis 11, dadurch gekennzeichnet, daß die Spülung mit Wasser bei einer Temperatur von 15 bis 120°C, gegebenenfalls unter Druck, oder mit Alkoholen, vorzugsweise Methanol oder Ethanol, und Salzlösungen bei einer Temperatur von 15 bis 60°C vorgenommen worden ist.

13. Al₂O₃-haltiges, hochtextiles und hochtemperaturbeständiges Glasstapelfaservorgarn nach wenigstens einem der Ansprüche 9 bis 12 dadurch gekennzeichnet, daß die Trocknung bei einer Temperatur von 40 bis 250°C vorgenommen worden ist und gegebenenfalls bei einer Temperatur von 250 bis 1000°C geglüht wurde.

14. Al₂O₃-haltiges, hochtemperaturbeständiges Glasstapelfaserprodukt aus einem Al₂O₃-haltigen, hochtextilen und hochtemperaturbeständigen Glasstapelfaservorgarn auf Kieselsäurebasis nach einem der Ansprüche 1 bis 13.

15. Al₂O₃-haltiges, hochtemperaturbeständiges Glasstapelfaserprodukt nach Anspruch 14, dadurch gekennzeichnet, daß es ausgewählt ist aus der Gruppe bestehend aus: Glasstapelfasergarnen, -zwirnen und technischen Textilien in Form von Geweben, Vliesstoffen, vorzugsweise Nadelmatten, Schnüren, Bändern, Schläuchen, Packungen sowie Glasfaserpapieren und Glasfaserplatten oder -boards, und losen Schnittfasern.

16. Verwendung des Al₂O₃-haltigen, hochtextilen und hochtemperaturbeständigen Glasstapelfaservorgarns nach einem der Ansprüche 1 bis 13 bzw. des Al₂O₃-haltigen, hochtemperaturbeständigen Glasstapelfaserproduktes nach Anspruch 14 oder 15 für Wärmeisolationsmaterialien insbesondere in Öfen, Brennkammern, Kesseln, Gasleitungen, für Hochtemperaturdichtungen und Hochtemperaturisolierungen, als Isolations- und Schallschutzmaterialien in der Bauindustrie, im Brandschutz, für akustische und thermische Dämmung in der Kfz-Industrie, in der Metallbearbeitung und chemischen Industrie, für Elektro- und Haushaltsgeräte, in der Abgas- und Filtriertechnik, in der Medizintechnik, als Batterieseparatoren und Kompensatoren, zur Isolierung von Rohren, Pipelines und elektrischen Leitungen, im Schiffsbau, zur Herstellung von Wärmeschutzschilden bei der Luft- und Raumfahrt sowie als Asbest- und Keramikfaserersatz.

17. Verwendung des Al₂O₃-haltigen, hochtextilen und hochtemperaturbeständigen Glasstapelfaservorgarns nach einem der Ansprüche 1 bis 13 bzw. des Al₂O₃-haltigen, hochtemperaturbeständigen Glasstapelfaserproduktes nach Anspruch 14 oder 15 als Verstärkungsmaterial für Kunststoffe, zur Werkstoffverstärkung, als Futter für Textilien und Spezialtextilien, als Träger für Bitumen und für die Verstärkung von Gips, Zement, Papier und Kautschuk.

## Claims

1. Al₂O₃-Containing, highly textile and high-temperature resistant glass sliver on silica basis, which may be obtained by acid extraction of a glass sliver having the following composition:
70-75% (wt.) SiO₂
15-25% (wt.) Na₂O and/or K₂O
1 to 5% (wt.) Al₂O₃
and up to 5% (wt.) at the most of further constituents.

2. Al₂O₃-Containing, highly textile and high-temperature resistant glass sliver on silica basis according to claim 1, which may be obtained by extraction of a glass sliver with an inorganic or organic acid, optionally in the presence of soluble silicones, characterised in that it contains the following components in the specified mass proportions:
85 to 99% (wt.) SiO₂
1 to 5% (wt.) Al₂O₃
0 to 10% (wt.) Na₂O and/or K₂O
0 to 3% (wt.) CaO
0 to 2% (wt.) MgO
0 to 2% (wt.) B₂O₃
0 to 1% (wt.) TiO₂
0 to 1% (wt.) Fe oxides, in particular Fe₂O₃
0 to 1% (wt.) ZrO₂
0 to 0.5% (wt.) BaO
0 to 0.5% (wt.) PbO
0 to 0.5% (wt.) ZnO
0 to 0.5% (wt.) Cr₂O₃ and
0 to 0.5% (wt.) F.

3. Al₂O₃-Containing, highly textile and high-temperature resistant glass sliver according to claim 2, characterised in that it contains the following components in the specified mass proportions:
90 to 98% (wt.) SiO₂
2 to 5% (wt.) Al₂O₃
0 to 3% (wt.) Na₂O and/or K₂O
0 to 1% (wt.) CaO
0 to 1% (wt.) MgO
0 to 1% (wt.) Fe oxides, in particular Fe₂O₃ and
0 to 1% (wt.) TiO₂.

4. Al₂O₃-Containing, highly textile and high-temperature resistant glass sliver according to claim 2 or 3, characterised in that it contains the following components in the specified mass proportions:
95 to 98% (wt.) SiO₂
2 to 5% (wt.) Al₂O₃
0 to 1% (wt.) Na₂O and/or K₂O
based on the total mass of the named components.

5. Al₂O₃-Containing, highly textile and high-temperature resistant glass sliver according to claim 2, characterised in that it contains the following components in the specified mass proportions:
95 to 99% (wt.) SiO₂
1 to 5% (wt.) Al₂O₃
0 to 1% (wt.) Na₂O and/or K₂O
0 to 3% (wt.) CaO
0 to 1% (wt.) Fe₂O₃
0 to 1% (wt.) TiO₂ and
0 to 1% (wt.) MgO.

6. Al₂O₃-Containing, highly textile and high-temperature resistant glass sliver according to one of claims 1 to 5, characterised in that it presents a fiber cross-section of 6 to 15 µm, preferably 7 to 10 µm.

7. Al₂O₃-Containing, highly textile and high-temperature resistant glass sliver according to one of claims 1 to 6, characterised in that it contains staple fibers having a length of 50 to 1000 mm and/or presents a fineness of 100 to 2000 tex.

8. Al₂O₃-Containing, highly textile and high-temperature resistant glass sliver according to one of claims 1 to 6, characterised in that the strength of the single fibers is 2 to 50 cN/tex, preferably 10 to 30 cN/tex.

9. Al₂O₃-Containing, highly textile and high-temperature resistant glass sliver according to at least one of claims 2 to 7, characterised in that acid extraction was carried out under pressure and/or rinsing with water, alcohols or salt solutions and/or drying and optionally annealing.

10. Al₂O₃-Containing, highly textile and high-temperature resistant glass sliver according to at least one of claims 2 to 8, characterised in that said inorganic acid is sulfuric acid, nitric acid, phosphoric acid, or preferably hydrochloric acid, and for the acid extraction preferably the following conditions of acid extraction were applied:
temperature range: 30-90°C
concentration range: 1-30%
duration of acid extraction: 2-12 hours and quantity ratio of the glass fiber material used to the volume of the acid medium: 1/2.1 to 1/40.

11. Al₂O₃-Containing, highly textile and high-temperature resistant glass sliver according to at least one of claims 2 to 8, characterised in that said acid is an organic acid, preferably formic acid, acetic acid or oxalic acid, and preferably the following conditions of acid extraction were applied:
temperature range: 30°C to the boiling point of the organic acid
concentration range: 1-80%, for oxalic acid 1 to 30% duration of acid extraction: 2-12 hours and
quantity ratio of the glass fiber material used to the volume of the acid medium: 1/2.1 to 1/40.

12. Al₂O₃-Containing, highly textile and high-temperature resistant glass sliver according to at least one of claims 9 to 11, characterised in that rinsing with water was carried out at a temperature of 15 to 120°C, optionally under pressure, or with alcohols, preferably methanol or ethanol, and salt solutions at a temperature of 15 to 60°C.

13. Al₂O₃-Containing, highly textile and high-temperature resistant glass sliver according to at least one of claims 9 to 12, characterised in that drying was carried out at a temperature of 40 to 250°C and optionally annealing was performed at a temperature of 250 to 1000°C.

14. Al₂O₃-Containing, high-temperature resistant glass staple fiber product of an Al₂O₃-containing, highly textile and high-temperature resistant glass sliver on silica basis according to one of claims 1 to 13.

15. Al₂O₃-Containing, high-temperature resistant glass staple fiber product according to claim 14, characterised in that it is selected from among the group consisting of: glass staple fiber yarns, twisted yarns and technical textiles having the form of woven fabrics, bonded fiber fabrics, preferably needle-punched mats, cords, ribbons, hoses, packings as well as glass fiber papers and glass fiber panels or boards, and loose staple fibers.

16. Use of the Al₂O₃-containing, highly textile and high-temperature resistant glass sliver according to one of claims 1 to 13, or of the Al₂O₃-containing, high-temperature resistant glass staple fiber product according to claim 14 or 15 for heat insulation materials in particular in furnaces, combustion chambers, boilers, gas conduits, for high-temperature sealing means and high-temperature insulations, as insulation and sound proofing materials in the construction industry, in fire protection, for acoustic and thermal insulation in the automotive industry, in metal processing and chemical industry, for electrical and household appliances, in exhaust gas and filtration technology, in medical technology, as accumulator separators and compensators, for the insulation of pipes, pipelines and electrical leads, in shipbuilding, for the production of heat shields in aviation and aerospace engineering, as well as a substitute for asbestos and ceramic fiber.

17. Use of the Al₂O₃-containing, highly textile and high-temperature resistant glass sliver according to one of claims 1 to 13, or of the Al₂O₃-containing, high-temperature resistant glass staple fiber product according to claim 14 or 15 as a reinforcing material for synthetic materials, for material reinforcement, as a lining for textiles and special-purpose textiles, as a carrier for bitumen and for the reinforcement of gypsum, cement, paper and rubber.

## Revendications

1. Ruban de verre textile contenant du Al₂O₃, à forte teneur en textile et à haute résistance thermique, à base d'acide silicique, qu'on peut obtenir par extraction avec un acide d'un ruban de verre textile ayant la composition suivante :
70 - 75 % en poids de SiO₂
15 - 25 % en poids de Na₂O et/ou de K₂O
1 à 5 % en poids de Al₂O₃
ainsi que jusqu'à 5 % en poids au maximum d'autres composants.

2. Ruban de verre textile contenant du Al₂O₃, à forte teneur en textile et à haute résistance thermique, à base d'acide silicique selon la revendication 1, qu'on peut obtenir par extraction d'un ruban de verre textile avec un acide inorganique ou organique, le cas échéant en présence de silicone soluble, caractérisé en ce qu'il contient les composants suivants dans les proportions en poids indiquées :
85 à 99 % en poids de SiO₂
1 à 5 % en poids de Al₂O₃
0 à 10 % en poids de Na₂O et/ou de K₂O
0 à 3 % en poids de CaO
0 à 2 % en poids de MgO
0 à 2 % en poids de B₂O₃
0 à 1 % en poids de TiO₂
0 à 1 % en poids d'oxydes de fer, en particulier de Fe₂O₃
0 à 1 % en poids de ZrO₂
0 à 0,5 % en poids de BaO
0 à 0,5 % en poids de PbO
0 à 0,5 % en poids de ZnO
0 à 0,5 % en poids de Cr₂O₃ et
0 à 0,5 % en poids de F.

3. Ruban de verre textile contenant du Al₂O₃ à forte teneur en textile et à haute résistance thermique selon la revendication 2, caractérisé en ce qu'il contient les composants suivants dans les proportions en poids indiquées :
90 à 98 % en poids de SiO₂
2 à 5 % en poids de Al₂O₃
0 à 3 % en poids de Na₂O et/ou de K₂O
0 à 1 % en poids de CaO
0 à 1 % en poids de MgO
0 à 1 % en poids d'oxydes de fer, en particulier de Fe₂O₃ et
0 à 1 % en poids de TiO₂.

4. Ruban de verre textile contenant du Al₂O₃ à forte teneur en textile et à haute résistance thermique selon la revendication 2 ou 3, caractérisé en ce qu'il contient les composants suivants dans les proportions en poids indiquées :
95 à 98 % en poids de SiO₂
2 à 5 % en poids de Al₂O₃
0 à 1 % en poids de Na₂O et/ou de K₂O
par rapport au poids total des composants cités.

5. Ruban de verre textile contenant du Al₂O₃ à forte teneur en textile et à haute résistance thermique selon la revendication 2, caractérisé en ce qu'il contient les composants suivants dans les proportions en poids indiquées :
95 à 99 % en poids de SiO₂
1 à 5 % en poids de Al₂O₃
0 à 1 % en poids de Na₂O et/ou de K₂O
0 à 3 % en poids de CaO
0 à 1 % en poids de Fe₂O₃
0 à 1 % en poids de TiO₂ et
0 à 1 % en poids de MgO.

6. Ruban de verre textile contenant du Al₂O₃ à forte teneur en textile et à haute résistance thermique selon l'une des revendications 1 à 5, caractérisé en ce qu'il présente une section transversale des fibres de 6 à 15 µm, de préférence de 7 à 10 µm.

7. Ruban de verre textile contenant du Al₂O₃ à forte teneur en textile et à haute résistance thermique selon l'une des revendications 1 à 6, caractérisé en ce qu'il contient des fibres discontinues d'une longueur de 50 à 1000 mm et/ou en ce qu'il présente une finesse de 100 à 2000 tex.

8. Ruban de verre textile contenant du Al₂O₃ à forte teneur en textile et à haute résistance thermique selon l'une des revendications 1 à 6, caractérisé en ce que la solidité des fibres individuelles est de 2 à 50 cN/tex, de préférence de 10 à 30 cN/tex.

9. Ruban de verre textile contenant du Al₂O₃ à forte teneur en textile et à haute résistance thermique selon au moins l'une des revendications 2 à 7, caractérisé en ce qu'on effectue l'extraction à l'acide sous pression et/ou avec rinçage avec de l'eau, des alcools ou des solutions salines et/ou avec séchage ainsi qu'avec calcination le cas échéant.

10. Ruban de verre textile contenant du Al₂O₃ à forte teneur en textile et à haute résistance thermique selon au moins l'une des revendications 2 à 8, caractérisé en ce que l'acide inorganique est de l'acide sulfurique, de l'acide nitrique, de l'acide phosphorique ou, de préférence, de l'acide chlorhydrique, et pour l'extraction à l'acide, on emploie de préférence les conditions suivantes d'extraction à l'acide :
plage de température : 30 - 90°C
plage de concentration : 1 - 30 %
durée de l'extraction avec un acide : 2 à 12 heures, et rapport quantitatif du matériau utilisé fibre de verre par rapport au volume du milieu acide : 1/2,1 à 1/40.

11. Ruban de verre textile contenant du Al₂O₃ à forte teneur en textile et à haute résistance thermique selon au moins l'une des revendications 2 à 8, caractérisé en ce que l'acide est un acide organique, de préférence l'acide formique, l'acide acétique ou l'acide oxalique, et on utilise de préférence les conditions suivantes pour l'extraction avec un acide :
plage de température : entre 30°C et le point d'ébullition de l'acide organique
plage de concentration : 1 - 80 %, et de 1 à 30 % pour l'acide oxalique
durée de l'extraction avec un acide : 2 - 12 heures et rapport quantitatif du matériau utilisé fibre de verre par rapport au volume du milieu acide : 1/2,1 à 1/40.

12. Ruban de verre textile contenant du Al₂O₃ à forte teneur en textile et à haute résistance thermique selon au moins l'une des revendications 9 à 11, caractérisé en ce qu'on effectue le rinçage à l'eau à une température de 15 à 120°C, le cas échéant sous pression, ou avec des alcools, de préférence du méthanol ou de l'éthanol, et avec des solutions salines à une température de 15 à 60°C.

13. Ruban de verre textile contenant du Al₂O₃ à forte teneur en textile et à haute résistance thermique selon au moins l'une des revendications 9 à 12, caractérisé en ce qu'on effectue le séchage à une température de 40 à 250°C, et le cas échéant, on effectue un recuit à une température de 250 à 1000°C.

14. Produit de verre textile contenant du Al₂O₃ à haute résistance thermique à base d'un ruban de verre textile contenant du Al₂O₃, à forte teneur en textile et à haute résistance thermique, à base d'acide silicique selon l'une des revendications 1 à 13.

15. Produit de verre textile contenant du Al₂O₃ à haute résistance thermique selon la revendication 14, caractérisé en ce qu'on le choisit dans l'ensemble constitué par des fils de verranne, des fils retors de verranne et des textiles techniques sous la forme de tissés, de non-tissés, de préférence de nattes aiguilletées, de ficelles, de liens, de tuyaux souples, de garnitures ainsi que de papiers à fibres de verre et de plaques ou de plaquettes de fibres de verre et de fibres découpées lâches.

16. Utilisation du ruban de verre textile contenant du Al₂O₃, à forte teneur en textile et à haute résistance thermique selon l'une des revendications 1 à 13 ou du produit de verre textile contenant du Al₂O₃ et à haute résistance thermique selon la revendication 14 ou 15 pour des matériaux calorifuges, en particulier dans des fours, des chambres de combustion, des chaudières, des canalisations de gaz, pour des joints d'étanchéité résistant à des températures élevées et des isolants résistant à des températures élevées, en tant que matériaux isolants et insonorisants dans l'industrie du bâtiment, pour l'ignifugation, pour l'isolement acoustique et thermique dans l'industrie automobile, dans l'industrie d'usinage des métaux et dans l'industrie chimique, pour des appareils électroménagers, dans la technique des gaz d'échappement et de la filtration, dans la technique médicale, en tant que séparateurs dans des batteries et en tant que compensateurs, pour isoler des tuyaux, des pipelines et des conduites électriques, dans l'industrie navale, pour la fabrication de boucliers antichaleur en aéronautique et en astronautique ainsi qu'en tant que substitut de l'amiante et des fibres céramiques.

17. Utilisation du ruban de verre textile contenant du Al₂O₃ à forte teneur en textile et à haute résistance thermique selon l'une des revendications 1 à 13 ou du produit de verre textile contenant du Al₂O₃ à haute résistance thermique selon la revendication 14 ou 15 en tant que matériau de renfort pour des matières plastiques, pour le renfort de matériaux, en tant que matière de garnissage pour des textiles et des textiles spéciaux, en tant que support pour le bitume et pour le renfort du plâtre, du ciment, du papier et du caoutchouc.
